# EUROPÄISCHE PATENTSCHRIFT

(11) **EP 2 105 627 B1**
(45) Veröffentlichungstag und Bekanntmachung des Hinweises auf die Patenterteilung: **14.07.2010**
(21) Anmeldenummer: 08153288.9
(22) Anmeldetag: 26.03.2008
(51) Int. Cl.: F16D 65/097

(54) **Bremsbelag mit Belaghaltefeder**
Brake pad with retaining spring
Garniture de frein avec un ressort de maintien

(43) Veröffentlichungstag der Anmeldung: 30.09.2009
(73) Patentinhaber: Lumag Sp. z o.o, 64-840 Budzyn (PL)
(72) Erfinder: Paszkiel, Marek, 64-610, Rogozno Wlkp. (PL)
(74) Vertreter: Birken, Lars

(56) Entgegenhaltungen:
- EP-A- 1 452 765
- EP-A- 1 519 070
- EP-A- 1 600 653
- WO-A-2008/090128
- AU-B2- 618 968
- US-A- 3 970 172

## Beschreibung

Die Erfindung betrifft einen Bremsbelag für eine Scheibenbremse für Straßenfahrzeuge, mit einer Belagträgerplatte und einer bogenförmigen Belaghaltefeder, die zwei Enden aufweist und im Bereich ihrer beiden Enden lösbar mit der Belagträgerplatte verbunden ist und deren Federkraft in Richtung der Ebene der Belagträgerplatte wirkt.

Bremsbeläge der vorgenannten Art sind typischerweise solcherart aufgebaut, dass auf der Belagträgerplatte ein Belagmaterial vollflächig befestigt ist, welches für die Bremswirkung günstige Reibungseigenschaften im Verhältnis zu der üblicherweise metallischen Bremsscheibe der Scheibenbremse aufweist.

Solche Bremsbeläge sind in einem Belagschacht eines ortsfesten Bremssattels gelagert und die durch die Bremskraft auf die Bremsbeläge wirkenden Kräfte werden über die seitlichen Außenkanten der Belagträgerplatte auf den Bremssattel übertragen.

Auf der von der Bremsscheibe wegweisenden Außenkante der Belagträgerplatte wird ein Bremsbelag typischerweise mittels Stiften, Bolzen oder dergleichen im Bremsbelagschacht gehalten, wobei diese Stifte, Bolzen oder dergleichen nicht unmittelbar auf den Bremsbelag wirken, sondern eine Belaghaltefeder mechanisch zwischen die Stifte, Bolzen oder dergleichen und die Belagträgerplatte gekoppelt ist. Hierdurch wird eine insoweit elastische Fixierung des Bremsbelags innerhalb des Bremsbelagschachtes erzielt, die insbesondere Bremsrütteln und Bremsquietschen verhindern kann und zugleich eine Verklemmung des Bremsbelags innerhalb des Bremsbelagschachtes verhindert.

Sowohl bei der Erstmontage einer Scheibenbremse als auch bei späteren Austauschvorgängen der Bremsbeläge ist es in der Regel erforderlich, die Belaghaltefeder von der Belagträgerplatte zu lösen. Die Befestigung zwischen Belaghaltefeder und Belagträgerplatte ist daher lösbar ausgestaltet.

Die lösbare Befestigung zwischen Belaghaltefeder und Belagträgerplatte muss sowohl gegenüber allen auftretenden Betriebsbelastungen zuverlässig die gewünschte Verbindung aufrechterhalten als auch in der Lage sein, die Betriebskräfte zu übertragen. Weiterhin ist es gewünscht, dass die Befestigung zwischen Belagträgerplatte und Belaghaltefeder einfach herzustellen und wieder zu lösen ist, um sowohl die Erstmontage als auch den Austausch eines Bremsbelags in einfacher Weise bewerkstelligen zu können.

Aus DE 10 2006 007 017 A1 ist eine Bremsbelaghalterung und ein Bremsbelag für eine Scheibenbremse bekannt, bei der die Belagträgerplatte mittels zweier Befestigungsfedern im Bremsbelagschacht fixiert wird. Die zwei Befestigungsfedern weisen jeweils einen bogenförmigen Mittelabschnitt und zwei Endabschnitte auf, die in einem engeren Radius gebogen sind als der bogenförmige Mittelabschnitt und einander zuweisen. Die beiden bogenförmigen Endabschnitte umgreifen jeweils einen Vorsprung mit Hinterschnitt, der an der Selagträgerplatte ausgebildet ist und bewirken somit eine verspannte Befestigung der Befestigungsfeder an der Bremsbelagträgerplatte. Zwar kann auf diese Weise eine lösbare Befestigung der beiden Befestigungsfedern an der Belagträgerplatte erzielt werden, jedoch ist die Montage aufwendig und insbesondere die Demontage nur mit erheblichem Aufwand und unter Einsatz entsprechend ausgebildeten Werkzeugs möglich. Ein weiterer Nachteil einer solchen Anordnung ist, dass die Belagträgerplatte eine verhältnismäßig aufwendige Ausgestaltung ihrer Außenkante mit insgesamt vier Hinterschnitten aufweist und hierdurch fertigungstechnisch anspruchsvoll und somit kostenintensiv ist.

Aus DE 20 2007 011 363 U1 ist ebenfalls ein Bremsbelag für eine Scheibenbremse bekannt. Bei diesem Bremsbelag wird eine Belaghaltefeder an der Belagträgerplatte befestigt, indem zwei beabstandete Vorsprünge mit Hinterschnitten durch zwei in den Endbereichen der Belaghaltefeder ausgebildete Langlöcher hindurchgesteckt werden und hiernach auf der außenliegenden Seite der Belaghaltefeder mit Sicherungsringen gesichert werden. Dies bewirkt eine sichere Befestigung der Belaghaltefeder an der Belagträgerplatte, ist jedoch sowohl konstruktiv als auch fertigungstechnisch aufwendig und schließlich sowohl in der Montage als auch der Demontage nur sehr aufwendig zu handhaben.

Aus WO 2007/134785 A1 ist ein Belagträger und eine Druckplatte für eine Scheibenbremse bekannt, bei der die Befestigung der Beläghaltefeder an der Belagträgerplatte erzielt wird, indem ein an der Belagträgerplatte befestigter Vorsprung durch eine Öffnung in der Belagträgerplatte hindurchgeführt wird. Am Ende des Vorsprungs ist eine Verdickung angeordnet, die unter Abwinkelung der Belagträgerplatte durch die Öffnung hindurchgeführt werden kann und nach Zurückkippen der Belagträgerfeder eine Ablösung der Belaghaltefeder von der Belagträgerplatte verhindert: Eine solche Ausgestaltung ist fertigungstechnisch aufwendig, da sie in der Regel eine spanende Bearbeitung der Belagträgerplatte erfordert, um den Vorsprung in entsprechender Weise auszugestalten und somit keine fertigungstechnisch vorteilhafte Stanzung der Belagträgerplatte aus einer Vollplatte ohne nachfolgende spanende Bearbeitung erlaubt.

Aus EP 0 534 987 B1 ist ein Bremsbelag bekannt, bei dem die Belaghaltefeder wiederum mittels an der Belagträgerplatte ausgebildeten Vorsprüngen befestigt wird, die durch Öffnungen in der Belaghaltefeder hindurchgreifen. Die Befestigungskraft wird hierbei durch Verspannung der äußeren Innenkanten der Öffnungen an den Vorsprüngen der Belagträgerplatte erzielt. Auch eine solche Ausgestaltung erfordert eine präzise und damit fertigungstechnische Ausstanzung der Belagträgerplatte und eine fertigungstechnisch aufwendige Herstellung der Öffnungen in der Belaghaltefeder. Zudem ist auch mit einer solchen Ausgestaltung die Montage und Demontage der Belaghaltefeder von der Beiagträgerplatte aufwendig und kann oftmals nicht ohne spezielles Werkzeug bewerkstelligt werden. Durch die dabei auftretenden Federkräfte besteht zudem die Gefahr, die Belaghaltefeder im Zuge des Montage- oder Demontagevorgangs unkontrolliert abspringt und den Monteur verletzt.

WO 2008/090128 A1, zwischen veröffentlicht am 31.08.2008, offenbart einen Bremsbelag, bei dem die Belaghaltefeder aus einem Draht mit rundem Querschnitt ausgebildet ist und in zwei Bohrungen in der Stirnseite des Belagträgers eingesetzt ist.

EP 1 452 765 A2 offenbar einen Bremsbelag, bei dem die Belaghaltefeder an zwei Stangen befestigt ist, die sich Senkrecht zur Belagträgerplatte erstrecken. Eine ähnliche Ausgestaltung ist in EP 1 519 07b A1 gezeigt.

Aus US 3,970,172 und EP 1 600 653 A1 sind Bremsbelagausgestaltungen bekannt, bei denen die Belaghaltefeder durch Umklammerung von zwei an der Belagträgerplatte ausgeformten Absätzen an dieser Belagträgerplatte befestigt ist.

Es besteht daher ein Bedarf für einen Bremsbelag, bei dem die Belaghaltefeder in fertigungstechnisch und montagetechnisch einfacher Weise an der Belagträgerplatte befestigt ist.

Dieser Bedarf wird erfindungsgemäß durch einen Bremsbelag gemäß Anspruch 1 gelöst.

Die Belagträgerplatte weist im Bereich des ersten und/oder zweiten Endes der Beiaghaltefeder eine Ausnehmung auf und die Belaghaltefeder ist ihrem ersten bzw. zweiten Ende in die entsprechende Ausnehmung in der Belagträgerplatte im Bereich des ersten und/oder zweiten Endes eingesteckt. Mit dieser Ausgestaltung wird eine besonders einfache Befestigung der Belaghaltefeder an der Belagträgerplatte erreicht, indem ein einfaches Einstecken eines oder beider Enden der Belaghaltefeder in eine entsprechend geformte Ausnehmung in der Belagträgerplatte ermöglicht wird. Hierdurch kann eine Verspannung der Belaghaltefeder zwischen den beiden Enden erreicht werden und somit eine durch die Federkraft der Belaghaltefeder erzeugte Einspannung derselben als Befestigungskraft dienen. Dabei ist es insbesondere vorteilhaft, wenn die Belaghaltefeder im ungespannten Zustand einen Abstand zwischen den beiden Enden aufweist, der größer ist als der Abstand, der an der Belagträgerhalteplatte zwischen den beiden Ausnehmungen ausgebildet ist, um hierdurch zu erreichen. dass die Belaghaltefeder im beidseitig eingesteckten Zustand unter einer Federspannung steht, welche die Befestigung sicherstellt.

Dabei ist vorgesehen, dass die Ausnehmung in der Belagträgerplatte ein Schlitz ist, dessen Erstreckungsrichtung in die Tiefe der. Bremsbelagplatte in Bezug auf die Richtung der Federkraft des bogenförmigen Mittelabschnitts abgewinkelt ist. Hierdurch wird eine sichere Befestigung der Belaghaltefeder an der Belagträgerplatte erzielt.

Der erfindungsgemäß Bremsbelag hat den Vorteil, dass durch die Ausgestaltung des bogenförmigen Mittelabschnitts in einem größeren Radius dem zu einem oder beiden Enden anschließenden bogenförmigen Endabschnitt, dessen Bogen in der gleichen Richtung gebogen ist wie der Mittelabschnitt, eine vorteilhafte Federkraftverteilung bewirkt und hierdurch die Montage erheblich erleichtert wird. Die Belaghaltefeder weist einen Mittelabschnitt mit einer niedrigen Federkonstante und einen oder zwei Endabschnitte mit einer hohen Federkonstante auf, was die Handhabung der Belaghaltefeder im Zuge der Montage oder Demontage erheblich erleichtert. Es ist insbesondere bevorzugt, dass der zweite Radius etwa ein Zehntel des ersten Radius beträgt.

Die Belaghaltefeder ist insbesondere vorzugsweise so ausgestaltet, dass durch den Radius des bogenförmigen Mittelabschnittes den Krümmungsradius der Endabschnitte und die Radien der Übergangsbereiche zwischen diesen Endabschnitten und dem Mittelabschnitt ein solcher Betrieb der Belaghaltefeder erreicht wird, dass bei dem maximalen Federweg des Mittelabschnitts in Richtung der Belagträgerplatte die Belaghaltefeder in den Übergangsbereichen nicht blockiert wird.

Gemäß einer ersten bevorzugten Ausgestaltung weist die Belaghaltefeder an dem zweiten Ende einen zweiten bogenförmigen Endabschnitt auf, der in einem dritten Radius gebogen ist und dessen konkave Seite zur Belagträgerplatte weist, wobei der dritte Radius kleiner ist als der erste Radius, vorzugsweise gleich dem zweiten Radius. Bei dieser Ausgestaltung sind an beiden Enden der Belaghaltefeder bogenförmige Endabschnitte vorgesehen, deren Federkonstante aufgrund des kleinen Radius höher ist als die Federkonstante des bogenförmigen Mittelabschnitts und hierdurch wird eine symmetrische Federkraftwirkung bei Montage und Demontage erreicht, die von einem Monteur insbesondere gut kontrolliert werden kann, wodurch eine einfache, ohne Werkzeug zu bewerkstelligende Montage und Demontage der Belaghaltefeder an der Belagträgerplatte ermöglicht wird.

Gemäß einer weiteren bevorzugten Ausführungsform ist die Belaghaltefeder im Übergang zwischen dem bogenförmigen Mittelabschnitt und dem ersten und/oder zweiten Endabschnitt abgewinkelt. Durch einen solchen abgewinkelten Übergang wird es ermöglicht, die Wirkungsrichtung der Federkraft des Endabschnitts in Bezug auf die Wirkungsrichtung der Federkraft des Mittelabschnitts so zu gestalten, dass eine vorteilhafte Zusammenwirkung der beiden Federkräfte erfolgt und hierdurch insbesondere ein Benutzer sowohl bei der Montage wie auch bei der Demontage der Belaghaltefeder nur solche Kräfte überwinden muss, die mit seiner Handkraft ohne die Verwendung bestimmter Werkzeuge, insbesondere werkzeuglos überwunden werden können. Die Abwinklung kann dabei insbesondere symmetrisch an beiden Endabschnitten ausgebildet sein und kann insbesondere in einer solchen Richtung erfolgen, dass sie der Krümmung des Mittelabschnitts entgegengesetzt verläuft.

Dabei ist es weiter besonders bevorzugt, wenn bei der vorhergehenden Ausführungsform die Erstreckungsrichtung in die Tiefe der Bremsbelagplatte der beiden Schlitze zueinander geneigt ist, insbesondere solcherart, dass die Erstreckungsrichtungen symmetrisch zur Mittelachse der Belagträgerplatte liegen und nach außen weisen. Durch eine solche Neigung, insbesondere die zur Mittelachse der Belagträgerplatte symmetrische Neigung mit nach außen weisenden Richtungen kann die Belaghaltefeder unter Vorspannung in die Schlitze eingesetzt werden und hiernach darin unter Vorspannung in sicherer Weise montiert verbleiben. Die nach außen gerichtete Neigung der Schlitze entspricht dabei der nach außen gerichteten Federspannung, wenn der Abstand zwischen den beiden Schlitzen geringer ist als der Abstand zwischen den beiden Enden der Belaghaltefeder im ungespannten Zustand und stellt somit sicher, dass die Belaghaltefeder stabil in den beiden Schlitzen eingespannt bleibt. In entsprechend umgekehrter Weise erkennt der Fachmann, dass auch ein nach innen geneigter Verlauf der Schlitze vorteilhaft sein kann, insbesondere dann, wenn der Abstand zwischen den beiden Schlitzen in der Belagträgerhalteplatte größer ist als der Abstand zwischen den beiden Enden der Belaghaltefeder im ungespannten Zustand.

Weiterhin ist es bevorzugt, wenn der erste und oder der zweite bogenförmige Endabschnitt in einem konstanten Radius um mehr als 180° gebogen ist. Durch eine solche Ausgestaltung wird eine erhebliche Stabilisierung hinsichtlich der Federungseigenschaften der Belaghaltefeder im Bereich der beiden Endabschnitte erzielt und zudem eine definierte Federwirkung durch den Mittelabschnitt erzielt.

Noch weiter ist es bevorzugt, dass im Bereich des ersten und/oder zweiten Endabschnittes eine Ausnehmung in der Belaghaltefeder ist, in welche ein an der Belagträgerplatte ausgebildeter Vorsprung solcherart formschlüssig eingreift, dass eine Verschiebung der Belaghaltefeder in der Normalenrichtung zur Ebene der Bremsträgerplatte verhindert wird. Eine spezifische Anforderung an die Befestigung der Belaghaltefeder an der Belagträgerplatte liegt darin, dass ein seitliches Verrutschen der Belaghaltefeder in Bezug auf die Belagträgerplatte oder gar ein komplettes seitliches Abrutschen zuverlässig verhindert werden muss. Dies ist insbesondere deshalb erforderlich, da die bei einem Aufbringen der Bremskraft auf den Bremsbelag wirkenden Kräfte in einer solchen Verschiebe- bzw. Abgleitrichtung wirken und den Bremsbelag dementsprechend relativ bewegen. Durch eine solche Retativbewegung kann eine Reibungskraft zwischen Belaghaltefeder, Belagträgerplatte bzw. Belaghaltefeder und dem Stift oder Bolzen oder dergleichen, welcher auf die Belaghaltefeder wirkt, verursacht werden, die ein Abgleiten nach sich ziehen kann. Dies wird durch die vorgenannte Fortbildung verhindert, indem ein Formschluss zwischen einem Vorsprung der Belagträgerplatte und einer Ausnehmung in der Belaghaltefeder bereitgestellt wird. Dabei ist zu berücksichtigen, dass ein solcher Formschluss auch in anderer Weise erzielt werden könnte, beispielsweise könnte das Ende der Belaghaltefeder eine Ausnehmung aufweisen, so dass dieses Ende die Belagträgerplatte teilweise seitlich umgreift oder in anderer Weise.

Schließlich kann der erfindungsgemäße Bremsbelag weiter fortgebildet werden, indem die Belaghaltefeder ausgehend von ihrem ersten und zweiten Ende jeweils ein Einsteck-Ende, einen sich daran schließenden Endbereich und den sich daran anschließenden bogenförmigen Endabschnitt aufweist, wobei der erste und der zweite bogenförmige Endabschnitt soweit gebogen ist, dass jeweils zwischen dem Ende und dem Endabschnitt angeordnete erste und zweite Endbereiche aufeinander zuweisen und die Einsteck-Enden jeweils gegenüber dem Endbereich entgegen der Krümmungsrichtung des bogenförmigen Endabschnitts abgewinkelt sind. Mit dieser Ausgestaltung wird eine besonders vorteilhafte und von Hand zu montierende und zu demontierende Konstruktionsweise verwirklicht, die zugleich eine hohe Betriebssicherheit aufweist.

Eine bevorzugte Ausführungsform der Erfindung wird anhand der anhängenden
Figuren beschrieben. Es zeigen:
   - Fig. 1:: eine Draufsicht einer erfindungsgemäßen Belagträgerplatte mit daran befestigter Belaghaltefeder, und
   - Fig. 2:: eine Seitenansicht der Belaghaltefeder in montiertem Zustand an der Seitenkante der Belagträgerplatte.

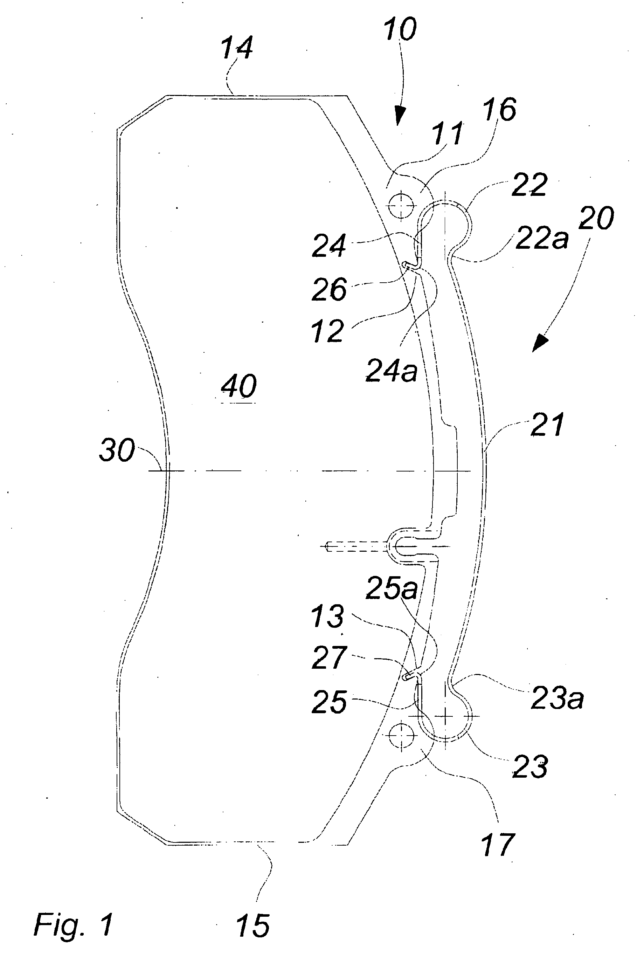

Figur 1 zeigt eine Belagträgerplatte 10, die bis auf einen freistehenden Randbereich 11 vollflächig mit einem Reibbelag 40 beklebt ist.

Im Bereich des freistehenden Randbereichs 11 ist eine Belaghaltefeder 20 befestigt. Die Belaghaltefeder 20 umfasst einen bogenförmigen Mittelabschnitt 21, der in einem Radius von etwa 300mm gebogen ist, und zwei zu den jeweiligen Enden sich an diesen bogenförmigen Mittelabschnitt 21 anschließende Endabschnitte 22, 23.

Die Endabschnitte 22, 23 sind mit dem Mittelabschnitt 21 über einen jeweiligen abgewinkelten Bereich 22a, 23a verbunden und ausgehend von diesem abgewinkelten Bereich 22a, 23a in einem kontinuierlichen Radius, der ca. 5mm beträgt, um ca. 215° gebogen.

An diesen gebogenen Endabschnitt 23 schließt sich ein gerader Endbereich 24, 25 jeweils an. Die geraden Endbereiche 24, 25 der Belaghaltefeder 20 sind etwa fluchtend zueinander.

Der Krümmungsradius der Endabschnitte 22, 23 ist gleichsinnig zu dem Krümmungsradius des gebogenen Mittelabschnitts 21, allerdings ist der Krümmungsradius der Endabschnitte 22, 23 um zumindest eine Größenordnung, vorzugsweise zwei Größenordnungen geringer als derjenige des bogenförmigen Mittelabschnitts 21.

Ausgehend von den geraden Endbereichen 24, 25 schließt sich jeweils eine Abwinklung 24a 25a an, die entgegengesetzt zur Krümmung der Endabschnitte 22, 23 verläuft und an die sich wiederum ein kurzes Einsteckende 26, 27 anschließt.

Das Einsteckende 26, 27 ist jeweils in einen kurzen Schlitz 12, 13 eingesteckt, der sich ausgehend von der Außenkante des belagfreien Kantenbereichs 11 in Richtung des Reibbelags 40 erstreckt.

Die Länge der Schlitze 12, 13 ist nur geringfügig größer als die Länge der Einsteckenden 26, 27 der Belaghaltefeder 20. Die Schlitze 26, 27 sind ausgehend von ihrem Schlitzanfang in der Außenkante des belagfreien Kantenbereichs 11 zu den Außenseiten 14, 15 der Belagträgerplatte gerichtet und um die mittlere Symmetrieachse 30 der Belagträgerplatte zueinander symmetrisch.

Der Abstand zwischen den beiden Schlitzen 12, 13 ist geringer als der Abstand zwischen den beiden Einsteckenden 26, 27 der Belaghaltefeder im ungespannten Zustand, so dass die Belaghaltefeder in der abgebildeten eingesteckten Weise in den Schlitzen 12, 13 verspannt ist und eine nach außen gerichtete Kraft in die Schlitze überträgt.

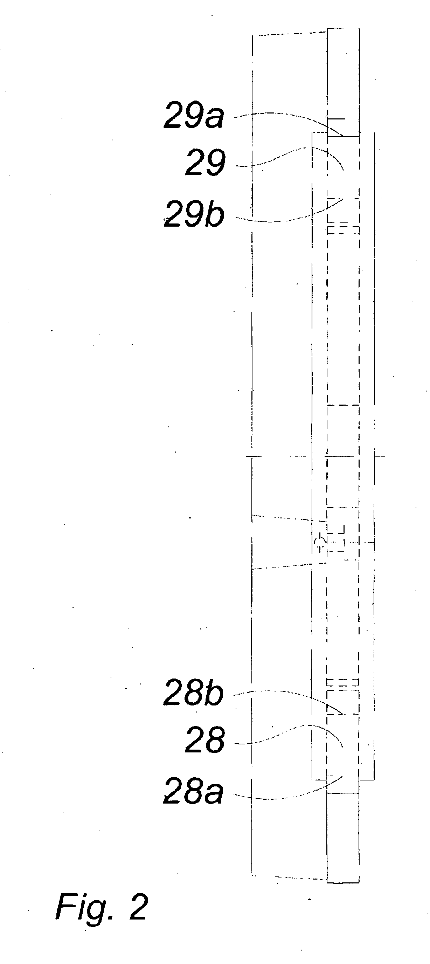

Wie aus Figur 1 weiter ersichtlich, überschneiden sich die Endabschnitte 22, 23 in einem Teilbereich mit Vorsprüngen 16, 17, die an der belagfreien Außenkante 11 der Belagträgerplatte 10 ausgebildet sind. Diese Überschneidung wird ermöglicht, indem zwei in Figur 2 teilsweise gestrichelt, teilsweise durchgezogen dargestellte, rechteckige Fenster 28, 29 in der Belaghaltefeder vorgesehen sind. Die Breite und Länge jedes Fensters 28, 29 ist geringfügig größer als die Breite des Vorsprungs 16 bzw. 17, welche der Materialstärke der Belagträgerhalteplatte 10 entspricht. Die Länge der Fenster 28, 29 ist so bemessen, dass kein Kontakt zwischen den Fensterinnenkanten 28a, b bzw. 29a, b und dem Vorsprung 16 bzw. 17 auftritt, sondern die Federvorspannung der Belaghaltefeder 20 vollständig in die Schlitze 12, 13 übertragen werden kann. Durch die teilweise Überschneidung des Endabschnitts 22, 23 mit den Vorsprüngen 16, 17 im Bereich der Fenster 28, 29 wird zuverlässig verhindert, dass die Belaghaltefeder 20 seitlich von der Belagträgerplatte 10 abgleiten kann.

## Patentansprüche

1. Bremsbelag für eine Scheibenbremse für Straßenfahrzeuge, mit einer Belagträgerplatte (10) und einer bogenförmigen Belaghaltefeder (20), die zwei Enden aufweist und im Bereich ihrer beiden Enden der Ebene der Belagträgerplatte verbunden ist und deren Federkraft in Richtung der Ebene der Belagträgerplatte wirkt,
wobei die Belaghaltefeder (10)
- einen bogenförmigen Mittelabschnitt (21) aufweist, der in einem ersten Radius gebogen ist und dessen konkave Seite zur Belagträgerplatte weist, und
- an dem ersten Ende einen ersten bogenförmigen Endabschnitt (22) aufweist, der in einem zweiten Radius gebogen ist und dessen konkave Seite zur Belagträgerplatte weist,
- wobei der zweite Radius kleiner ist als der erste Radius,
**dadurch gekennzeichnet, dass** die Belagträgerplatte im Bereich des ersten und/oder zweiten Endes der Belaghaltefeder eine Ausnehmung (12, 13) aufweist und die Belaghaltefeder mit ihrem ersten bzw. zweiten Ende (26, 27) in die entsprechenden Ausnehmungen (12, 13) in der Belagträgerhalteplatte (10) im Bereich des ersten und/oder zweiten Endes eingesteckt ist, wobei die Ausnehmung (12, 13) in der Beiagträgerplatte (10) ein Schlitz ist, dessen Erstreckungsrichtung in die Tiefe der in Bezug auf die Richtung der Federkraft des bogenförmigen Mittelabschnitts (21) abgewinkelt ist.

2. Bremsbelag nach dem vorhergehenden Anspruch,
**dadurch gekennzeichnet, dass** die Erstreckungsrichtung in die Tiefe der Bremsbelagplatte der leiden Schlitze (12, 13) zueinander geneigt ist, insbesondere solcherart, dass die Erstreckungsrichtungen symmetrisch zur Mittelachse (30) der Belagträgerplatte (10) liegen und nach außen weisen.

3. Bremsbelag nach einem der vorhergehenden Ansprüche,
**dadurch gekennzeichnet, dass** im Bereich des ersten und/oder zweiten Endabschnittes eine Ausnehmung (28, 29) in der Belaghaltefeder ist, in welche ein an der Belagträgerplatte ausgebildeter Vorsprung (16, 17) solcherart formschlüssig eingreift, dass eine Verschiebung der Belaghaltefeder in der Normalenrichtung zur Ebene der Belagträgerplatte verhindert wird.

4. Bremsbelag nach einem der vorhergehenden Ansprüche,
**dadurch gekennzeichnet, dass** die Belaghaltefeder
- an dem zweiten Ende einen zweiten bogenförmigen Endabschnitt (23) aufweist, der in einem dritten Radius gebogen ist und dessen konkave Seite zur Belagträgerplatte weist,
- wobei der dritte Radius kleiner ist als der erste Radius, vorzugsweise gleich dem zweiten Radius.

5. Bremsbelag nach einem der vorhergehenden Ansprüche,
**dadurch gekennzeichnet, dass** die Belaghaltefeder (20) im Übergang zwischen dem bogenförmigen Mittelabschnitt und dem ersten und/oder zweiten Endabschnitt abgewinklelt (22a, 23a) ist.

6. Bremsbelag nach einem der vorhergehenden Ansprüche,
**dadurch gekennzeichnet, dass** der erste und oder der zweite bogenförmige Endabschnitt (22, 23) in einem konstanten Radius um mehr als 180° gebogen ist.

7. Bremsbelag nach einem der vorhergehenden Ansprüche,
**dadurch gekennzeichnet, dass** die Belaghaltefeder (20) ausgehend von ihrem ersten und zweiten Ende jeweils
- ein EinstecK-Ende (26, 27),
- einen sich daran schließenden Endbereich (24, 25) und
- den sich daran anschließenden bogenförmigen Endabschnitt (22, 23) aufweist,
wobei
- der erste und der zweite bogenförmige Endabschnitt (22, 23) soweit gebogen ist, dass jeweils zwischen dem Ende und dem Endabschnitt angeordnete erste und zweite Endbereiche (24, 25) aufeinander zuweisen und
die Einsteck-Enden (26, 27) jeweils gegenüber dem Endbereich entgegen der Krümmungsrichtung des bogenförmigen Endabschnitts abgewinkelt.

## Claims

1. Brake pad for a disc brake for road vehicles, having a pad carrier plate (10) and an arcuate pad holding spring (20) which has two ends and is releasably connected in the region of its two ends to the pad carrier plate, and the spring force of which acts in the direction of the plane of the pad carrier plate,
wherein the pad holding spring (10)
- has an arcuate middle portion (21) which is curved with a first radius and the concave side of which faces the pad carrier plate, and
- on the first end, has a first arcuate end portion (22) which is curved with a second radius and the concave side of which faces the pad carrier plate,
- wherein the second radius is smaller than the first radius,
**characterised in that** in the region of the first and/or second end of the pad holding spring the pad carrier plate has a recess (12, 13) and the pad holding spring is inserted with its first and/or second end (26, 27) into the corresponding recesses (12, 13) in the pad carrier holding plate (10) in the region of the first and/or second end, wherein the recess (12, 13) in the pad carrier plate (10) is a slit, the extension direction of which into the depth of the pad carrier plate is angled in relation to the direction of the spring force of the arcuate middle portion (21).

2. Brake pad as claimed in the preceding claim,
**characterised in that** the direction of extension into the depth of the brake pad plate of the two slits (12, 13) is inclined with respect to each other, in particular in such a way that the extension directions lie symmetrically with respect to the middle axis (30) of the pad carrier plate (10) and are directed outwards.

3. Brake pad as claimed in any one of the preceding claims,
**characterised in that** in the region of the first and/or second end portion there is a cut-out (28, 29) in the pad holding spring, into which a projection (16, 17) formed on the pad carrier plate engages in a positive-locking manner in such a way that a displacement of the pad holding spring in the normal direction to the plane of the pad carrier plate is prevented.

4. Brake pad as claimed in any one of the preceding claims,
**characterised in that** the pad holding spring
- has, on the second end, a second arcuate end portion (23) which is curved with a third radius and the concave side of which faces the pad carrier plate,
- wherein the third radius is smaller than the first radius, and is preferably equal to the second radius.

5. Brake pad as claimed in any one of the preceding claims,
**characterised in that** the pad holding spring (20) is bent (22a, 23 a) in the transition between the arcuate middle portion and the first and/or second end portion.

6. Brake pad as claimed in any one of the preceding claims,
**characterised in that** the first and/or the second arcuate end portion (22, 23) is curved with a constant radius by more than 180°.

7. Brake pad as claimed in any one of the preceding claims,
**characterised in that** starting from its first and second end the pad holding spring (20) has in each case
- an insert end (26, 27),
- an end region (24, 25) adjoining this and
- the arcuate end portion (22, 23) adjoining this,
wherein
- the first and the second arcuate end portion (22, 23) is curved to such an extent that in each case first and second end regions (24, 25) disposed between the end and the end portion point towards each other and the insert ends (26, 27) are each angled with respect to the end region oppositely to the direction of curvature of the arcuate end portion.

## Revendications

1. Garniture d'un frein à disque pour véhicules routiers, avec une plaque porte-garniture (10) et un ressort de maintien de garniture (20) courbe, qui présente deux extrémités et est relié dans la zone de ses deux extrémités de manière amovible à la plaque porte-garniture et sa force ressort agit en direction du plan de la plaque porte-garniture,
dans laquelle la plaque porte-garniture (10)
- présente une section médiane (21) courbe qui est courbée selon un premier rayon et dont le côté concave est dirigé vers la plaque porte-garniture, et
- présente au niveau de la première extrémité, une première section d'extrémité (22) courbe qui est courbée selon un deuxième rayon et dont le côté concave est dirigé vers la plaque porte-garniture,
- dans laquelle le deuxième rayon est inférieur au premier rayon,
**caractérisée en ce que** la plaque porte-garniture présente un évidement (12, 13) dans la zone de la première et/ou deuxième extrémité du ressort de maintien de garniture et le ressort de maintien de garniture est enfiché avec sa première respectivement deuxième extrémité (26, 27) dans les évidements (12, 13) correspondants dans la plaque porte-garniture (10) dans la zone de la première et/ou deuxième extrémité, l'évidement (12, 13) dans la plaque porte-garniture (10) étant une fente dont la direction d'extension dans la profondeur de la plaque porte-garniture est coudée par rapport au sens de la force ressort de la section médiane (21) courbe.

2. Garniture de frein selon la revendication précédente, **caractérisée en ce que** la direction d'extension dans la profondeur de la plaque porte-garniture des deux fentes (12, 13) est inclinée l'une par rapport à l'autre, en particulier de telle manière que les directions d'extension sont symétriques par rapport à l'axe médian (30) de la plaque porte-garniture (10) et sont dirigées vers l'extérieur.

3. Garniture de frein selon l'une quelconque des revendications précédentes,
**caractérisée en ce qu'**il y a dans la zone de la première et/ou deuxième section d'extrémité un évidement (28, 29) dans le ressort de maintien de garniture, dans lequel une saillie (16, 17) réalisée au niveau de la plaque porte-garniture prend par correspondance de forme de sorte à empêcher un déplacement du ressort de maintien de garniture dans la direction normale au plan de la plaque porte-garniture.

4. Garniture de frein selon l'une quelconque des revendications précédentes,
**caractérisée en ce que** le ressort de maintien de garniture,
- présente au niveau de la deuxième extrémité une deuxième section d'extrémité (23) courbe qui est courbée selon un troisième rayon et dont le côté concave est dirigé vers la plaque porte-garniture,
- dans laquelle le troisième rayon est inférieur au premier rayon, de préférence identique au deuxième rayon.

5. Garniture de frein selon l'une quelconque des revendications précédentes,
**caractérisée en ce que** le ressort de maintien de garniture (20) est coudé au niveau de la transition entre la section médiane courbe et la première et/ou deuxième section d'extrémité (22a, 23a).

6. Garniture de frein selon l'une quelconque des revendications précédentes,
**caractérisée en ce que** la première et ou la deuxième section d'extrémité (22, 23) courbe est courbée selon un rayon constant de plus de 180°.

7. Garniture de frein selon l'une quelconque des revendications précédentes,
**caractérisée en ce que** le ressort de maintien de garniture (20) partant de sa première et deuxième extrémité présente respectivement
- une extrémité d'enfichage (26, 27),
- une zone d'extrémité (24, 25) s'y raccordant et
- la section d'extrémité (22, 23) courbe s'y raccordant, dans laquelle
- la première et la deuxième section d'extrémité (22, 23) courbe sont courbées de telle sorte que les première et deuxième zones d'extrémité (24, 25) agencées respectivement entre l'extrémité et la section d'extrémité sont dirigées l'une vers l'autre et les extrémités d'enfichage (26, 27) sont respectivement coudées par rapport à la zone d'extrémité dans le sens opposé au sens de courbure de la section d'extrémité courbe.
